# EUROPEAN PATENT APPLICATION

(11) **EP 4 806 758 A1**
(43) Date of publication of application: **16.09.2026**
(21) Application number: 25382234.0
(22) Date of filing: 13.03.2025
(51) Int. Cl.: B61L 27/12, B61L 27/16

(54) **SYSTEM AND METHOD FOR MANAGING ENERGY CONSUMPTION OF STATIONS OF A RAILWAY NETWORK**

(71) Applicant: Siemens Rail Automation S.A.U., 28760 Tres Cantos (Madrid) (ES)
(72) Inventor: Garcia Serrano Gonzalez, Juan Manuel, 45005 TOLEDO (ES); Diaz Flores, Yohanna Paula, 28802 Alcalá de Henares - Madrid (ES); Valle Pello, Pelayo, 28015 Madrid (ES)
(74) Representative: Siemens Patent Attorneys

(57) **Abstract**

The invention relates to a method and system for managing energy consumption of a set of railway stations (S11, S12,..., S48) of a railway network (110), wherein said set of railway stations (S11, S12,..., S48) comprises all stations served by a predefined set of lines (L1,...,L4), wherein each line (L1,...,L4) is associated to a respective nominal timetable (T10,...,T40) so that the predefined set of lines be associated to a corresponding set of nominal timetables, wherein each nominal timetable (T10,...,T40) associated to a line defines, for said line, the stations served by the line and a set of temporal parameters configured for defining a schedule according to which the railway stations of said line are served, said system comprising an energy management module (131) configured for receiving or acquiring, each nominal timetable of the corresponding set of nominal timetables and a given consumption period, for automatically creating for each received or acquired nominal timetable a set of test timetables comprising finetuned timetables that are finetuned versions of the nominal timetable with respect to its temporal parameters, for feeding a machine learning algorithm, called hereafter "EMLA", with different combinations of the test timetables for automatically determining a final set of test timetables configured for minimizing the energy consumed by the set of railway stations during the given consumption period, wherein each combination comprises a test timetable for each line of the predefined set, and wherein the EMLA has been trained to predict an energy consumption of each railway station of the set of railway stations when receiving as input a set of input data comprising a timetable for each line of the predefined set and a consumption period, the energy management module being further configured for outputting said final set of test timetables as the combination of test timetables that minimizes the energy consumed by the set of railway stations.

## Description

### Technical Field

The present invention is related to building energy consumption, more precisely to the energy consumption of a railway station.

### Background Art

Energy consumption of a railway station differs from the energy consumption of a usual building in the variability of the consumed energy. Indeed, railways stations have long operating hours for accommodating not only train schedules, passengers, but also maintenance activities, notably during off-peak hours, for instance at night or weekends. They may handle a large volume of passengers and a high traffic of trains, and/or subways, and/or freight trains, and/or any other rail transport means (public or load rail transport means) which will be commonly referred to as "rail vehicles" hereafter (a "rail vehicle" representing thus any transport means operating on a railway track). This large volume of passengers and high traffic of rail vehicles requires many different infrastructures whose working consumes energy, typically with peak energy during peak hours. In such a context, it is very challenging to optimally manage the energy consumption of a station given all different variables (rail vehicles, passengers, weather, etc.) which interact and may impact said energy consumption.

### Summary of Invention

An objective of the present invention is to propose a method and a system for managing energy consumption at a station that enable to optimize or minimize energy consumption of the station, and by the same way to save energy.

This objective is achieved by the measures taken in accordance with the independent claims. Further advantageous embodiments are proposed by the dependent claims.

More precisely, the present invention concerns a system for managing energy consumption of a set of railway stations of a railway network, wherein said railway network typically comprises a network of railway tracks interconnecting said railway stations and on which rail vehicles, notably electric rail vehicles, are configured for moving. The set of railway stations comprises all stations served by a line of a predefined set of lines when considering each of the lines (i.e. it comprises all stations served by the predefined set of lines), wherein each line of said predefined set starts at a respective first station, ends at a respective last station, and is associated to a respective nominal timetable, so that the predefined set of lines is associated to a corresponding set of nominal timetables. Each nominal timetable of said corresponding set is thus associated to a single line of the predefined set, and defines, for said line,
(i) the stations served by the line (i.e. by one of said (electric) rail vehicles), said served stations comprising the first station of the line, the last station of the line, and intermediate stations between the first and the last station if any, and
(ii) a set of temporal parameters configured for defining a schedule according to which the railway stations of said line are served during operating hours. In particular, said set of temporal parameters comprising:
   - a starting time at the first station of the first rail vehicle serving said first station during operating hours,
   - an ending time configured for defining, together with the starting time, a duration of said operating hours, said ending time being for instance the time at which a rail vehicle serves the last station for the last time, or the time at which a rail vehicle serves the first station for the last time during said operating hours (said operating hours typically define the time period during which the line to which said nominal timetable is associated to is operated), and
   - a service frequency according to which the stations of the line are served between said starting time and ending time (i.e. during operating hours). Preferentially, the nominal timetable may define one or several service frequencies for the line, wherein each service frequency is typically associated to a given temporal period within said operating hours (e.g. a first frequency used for each temporal period characterized by a high number of passengers, and a second frequency is used for each temporal period characterized by a lower number of passengers with respect to said high number), defining for said temporal period the frequency according to which the stations of the line are served.

In the following, it will be considered that each railway station typically comprises an electrical control panel connected on one side to several electric energy units - hereafter "EEU" - of the considered railway station, said EEUs comprising for instance powering systems for electric vehicles (train, tram, subways, bus, ...), electric track equipment, electric station equipment (platform equipment, light, escalators, lifts, HVAC, control systems, turnstiles, batteries, photovoltaic (PV) systems, etc.), and on the other side to an external electrical grid that supplies the railway station in energy, and thus, notably, at least part of its EEUs. Preferentially, for each railway station, the EEUs considered for the present invention are part of a set of EEUs that represents its main electrical energy consumers, i.e. that typically generate 80%-95% of the energy consumption of the considered railway station. It has to be pointed out that an EEU of the station might be an electrical energy consumer (e.g. escalator) or provider (e.g. PV systems or rail vehicles during braking phase when considering regenerative braking), or both (e.g. a battery which consumes energy during its charging phase and provides energy during discharge phases). In particular, the set of EEUs may comprise, in addition to the main electrical energy consumers, the main electrical energy providers, like the PV system and battery systems capable of supplying power up to several kWh. The energy consumed by the railway station refers thus to the energy consumed/taken from the external electrical grid (typically measured at the electrical control panel), and it is the consumption of this energy that the present invention proposes to optimize, notably by minimizing it. Further, the energy consumption is measured with respect to a (given) consumption period. According to the present invention, the (given) consumption period may vary. It can be for instance a day, a week, a month, a season (e.g. winter, summer, spring, autumn), but also part of a day, splitting a day in different parts, or part of a week (labor days and weekends), each associated to a specific energy consumption that needs to be minimized. Typically, the (given) consumption period covers at least one cycle of operating hours (said operating hours cyclically repeating by (re-) starting for a new cycle at each starting time) of the rail vehicles serving the stations of a line of said predefined set of lines. Preferentially, the (given) consumption period might be defined by a starting time and a duration or ending time.

In such a context, the system according to the invention comprises:
- an energy management module comprising typically a processor and a memory, said energy management module being configured for receiving or acquiring a consumption period, also called hereafter the "given consumption period", during which the energy consumption of the set of railway stations has to be optimized or minimized, for receiving or acquiring each nominal timetable of the corresponding set of nominal timetables, optionally the real time energy consumption data of each EEU, and/or, optionally, event information data that provide temporal information regarding an occurrence of an event that may impact the energy consumption of a railway station of said set. Each event information data is typically associated to one or several of said railway stations, i.e. is associated to the stations of the set that might be impacted by the event defined by said event information data. The event information data may comprise meteorological information data, concert/match/demonstration information data (e.g. a number of places that have been bought for a given concert at a given place and at a given date, or a number of spectators for a given football match at a given place and at a given date, etc.), traffic information data (e.g. railroad traffic information and/or road traffic information, like train/road accidents, estimated time for re-establishing the circulation), etc.

The energy management module according to the invention is configured for
a) automatically creating, for each received or acquired nominal timetable, a set of finetuned (i.e. adjusted) timetables by finetuning (i.e. adjusting) at least one of its temporal parameters, e.g. by finetuning the starting time and/or ending time and/or service frequency (or frequencies if several frequencies are defined in the nominal timetable) of the considered nominal timetable (i.e. at least one among its starting time, its ending time, and its service frequency (or frequencies if several frequencies are defined in the nominal timetable) is adjusted). Each finetuned timetable of said set of finetuned timetables is thus a version of the nominal timetable wherein at least one of its temporal parameters has been adjusted, all versions of a same set of finetuned timetables being different from each other;
b) for creating for each line of said predefined set, a set of test timetables comprising the nominal timetable associated to said line and the finetuned timetables created for said nominal timetable. Therefore, within a same set of test timetables, a test timetable can thus be a nominal timetable, or one of its corresponding finetuned timetables;
c) feeding a machine learning algorithm (also called hereafter the "Energy estimation Machine Learning Algorithm" or simply "EMLA") with different combinations of the test timetables and the given consumption period for automatically determining, by the system, a final set of test timetables configured for minimizing the energy consumed by the set of railway stations during the given consumption period, wherein each combination comprises a test timetable for, or of, each line of the predefined set (i.e. each combination comprises one test timetable per line of the predefined set of lines), and wherein the EMLA has been trained to predict an energy consumption of each railway station of the set of railway stations when receiving as input a set of input data comprising a timetable for each line of the predefined set and a consumption period; and
d) outputting said final set of test timetables as the combination of test timetables (among said different combinations) that minimizes the energy consumed by the set of railway stations, which is also called hereafter the "global energy" (the global energy is thus the energy consumed by the set of railway stations, i.e. the sum of the energies consumed by the different stations of the set of railway stations).

At the end, the energy management module is preferentially further configured for controlling a motion of rail vehicles on the railway network according to the outputted final set of test timetables, notably either directly, or indirectly by sending said final set of test timetables to a system in charge of the control of the motion of the railway vehicles on the railway network which is then configured, upon reception of the final set, for applying or implementing the test timetables of the final set so that the rail vehicles serve the railway station of the set of railway stations according to said test timetables of the final set.

The present invention also concerns a method for managing energy consumption of a set of railway stations of a railway network, the method comprising:
- acquiring or receiving, by an energy management module, each nominal timetable of the corresponding set of nominal timetables and a given consumption period during which the energy consumption of the set of railway stations has to be optimized;
- optionally collecting, by said energy management module, for each station of said set, and for each EEU of the concerned railway station (i.e. for said set of EEUs), real time energy consumption data (i.e. temporal energy consumption data), wherein said real time energy consumption data represents the energy currently consumed by the EEU of the concerned station;
- optionally, collecting, by said energy management module, for each railway station of said set, said event information data and/or passenger traffic data, wherein each event information data provides a temporal information regarding an occurrence of an event that may modify the energy consumption of the railway station, and said passenger traffic data provides, for each railway station, traffic information regarding the passengers arriving and leaving the railway station;
- automatically creating, for each nominal timetable that has been acquired or received, i.e. for each nominal timetable of said corresponding set, a set of finetuned timetables by finetuning at least one of the temporal parameters of the considered nominal timetable, e.g. by finetuning the starting time and/or ending time and/or any service frequency of the considered nominal timetable;
- automatically creating, for each line (i.e., for each nominal timetable), a set of test timetables comprising the nominal timetable associated to said line, and, with respect to said nominal timetable, the finetuned timetables of the set of finetuned timetables that has been created for said nominal timetable;
- feeding, for instance iteratively feeding, an EMLA with different combinations of the test timetables for automatically determining a final set of test timetables configured for minimizing the energy consumed by the set of railway stations during the given consumption period, wherein the EMLA has been trained to predict an energy consumption of each railway station of the set of railway stations when receiving as input a set of input data comprising a timetable for each line of the predefined set and a consumption period, wherein each of said different combinations comprises a test timetable for each line of the predefined set;
- outputting the final set of test timetables which corresponds to the combination of test timetables that minimizes said global energy.

### Description of Embodiments

According to the present invention, nominal timetables of lines serving a set of railway stations are adapted by the energy management module for minimizing or optimizing the energy consumed by the railway stations of said set when considering said given consumption period. The latter might be received by the system as an input provided by an operator, or might be a fixed parameter within the system, for instance the system searching to minimize the energy consumption for each next coming month. Said adaptation consists in adapting the starting time of a rail vehicle at the first station of the line and/or said ending time (e.g., the last time the first station is served by a rail vehicle during said operating hours) and/or any frequency defined in the nominal timetable. As it will be explained afterwards, said adaptation might be performed on the fly, for instance based on real time energy consumption data of the EEUs.

Preferentially, the set of test timetables created for each line of the predefined set of lines might be embodied by a variational matrix, the latter being or representing thus the created set of test timetables. In other words, the energy management module is configured for creating, for each line of the predefined set of lines, and thus for each nominal timetable, a variational matrix (or matrix of variations) comprising matrix elements representing the temporal parameters of the nominal timetable and variations of at least one of said temporal parameters, for instance variations of the starting time within a predefined starting temporal gap (e.g. +/- 20 min), and/or variations of the ending time within a predefined ending temporal gap (e.g. +/- 15 min, and/or variations of the service frequency within a predefined frequency temporal gap (e.g. +/- 5 minutes) or of any of the service frequencies that are defined within the nominal timetable. The variational matrix comprises thus matrix elements representing variations of at least one of the following temporal parameters of the nominal timetable: its starting time, its ending time, its service frequency (or its service frequencies if it comprises several service frequencies), i.e. matrix elements representing adapted temporal parameters (i.e. the temporal parameters of the finetuned timetables), and matrix elements representing the temporal parameters of the nominal timetable. The energy management module is then configured for feeding the EMLA with matrix elements of the created variational matrices in order to find the combination of temporal parameter values, e.g. values for starting times, ending times, and service frequencies, which, for said predefined set of lines, minimizes said global energy. For each line of the predefined set of lines, the energy management module creates thus a variational matrix comprising matrix elements representing variations in the starting and/or ending times and/or in any frequency defined in the nominal timetable, and then uses matrix elements of the created variational matrices for feeding the EMLA, wherein in each variational matrix, at least one set of matrix elements representing a test timetable (i.e. a set of matrix elements comprising a starting time, an ending time, and one or several service frequencies whose respective value may differ or not from, respectively, the starting time, ending time, and the one or several service frequencies of the nominal timetable) is picked up by the energy management module for feeding said EMLA. Consequently, such a set of matrix elements is picked up in the variational matrix associated to each line, creating therefore, for the set of predefined lines (i.e. for said corresponding set of nominal timetables), a corresponding set of test timetables that is then fed to the EMLA.

Preferentially, each variational matrix comprises at least three columns, namely a first column comprising matrix elements associated to starting times at the first station of the line, a second column comprising matrix elements associated to ending times, and a third column associated to the service frequencies for said line. If several service frequencies are defined each for a different temporal period within said operating hours, then the variational matrix preferentially comprises, for each of said several service frequencies, a respectively associated column related to the concerned service frequency, and, with respect to said concerned service frequency, one or several additional associated columns configured for defining said temporal period during which the concerned service frequency is implemented (the additional associated columns typically comprising parameters, like starting time and ending time, that enable to characterized the temporal period during which the concerned service frequency is used). Preferentially, each variational matrix comprises one row corresponding to the nominal timetable (i.e. at least one row of the variational matrix comprises matrix elements representing the values of the temporal parameters of the nominal timetable, i.e. its starting time, ending time, and frequency), and wherein each other row of the variational matrix comprises matrix elements representing a variation within the starting time and/or ending time and/or any frequency with respect to the nominal timetable, i.e. a different finetuning of the nominal timetable, and represents thus one of said finetuned timetables.

Preferentially, the energy management module is further configured for iteratively using as input to the EMLA a combination of the rows of the created variational matrices, wherein for each row combination, a single row is picked up in the variational matrix associated to each line of the predefined set of lines, each row combination being different from one another (i.e. each row combination is unique), the EMLA outputting for each row combination an associated predicted energy consumption of each station that is then used by the energy management module for calculating, for each row combination, a corresponding global energy consumption from the energy consumption predicted for each station for the concerned row combination, and for selecting, at the end, the row combination resulting in the minimum global energy consumed.

Preferentially, the energy management module comprises a set of combination rules (typically configured for preventing nonrealistic row combinations), and is configured for only performing row combinations that satisfy each of said combination rules. For instance, said combination rules are configured for constraining a value of a starting time and/or an ending time and/or one or several service frequencies of a line of the predefined set with respect to a value of a starting time and/or an ending time and/or one or several service frequencies of another line of the predefined set.

The EMLA is a trained algorithm which has been trained, for instance by the energy management module, during a training phase. During the training phase, the EMLA received as input an input training dataset comprising:
- sets of timetables, and,
- for each set of timetables, a given consumption period,
wherein each set of timetables comprises a timetable for each line of the predefined set of lines (in other words, the number of timetables in a set of timetables equals the number of lines of the predefined set) that defines the operation of the concerned line during said given consumption period, said timetable defining the starting time, ending time, and any frequency that were applied during said given consumption period, wherein, if several service frequencies are defined, then the timetable comprises parameters enabling to define the temporal period during which the service frequency is in used (e.g. starting time and duration, or starting time and ending time), optionally, said event information data characterizing event that took place during said given consumption period, wherein said event information data typically comprises a type of event data, its starting time and ending time or duration, and/or optionally passenger traffic information, the EMLA being trained on an output training dataset comprising, for said given consumption period, the energy consumption of each EEUs of the stations.

Preferentially, for each final set of test timetables that are implemented by the energy management module, the latter collects for each EEUs its energy consumption data (i.e. energy consumption data in function of the time) and populates a database with said energy consumption data which are associated to a corresponding final set of test timetables and event information data if any, as well as passenger traffic information data if any, and uses the latter (i.e. the set of test timetables, the event information data if any, the passenger traffic information data if any, and the EEUs energy consumption data) for further training the EMLA. Said database associates thus for a predefined set of lines, different corresponding final sets of test timetables to respective energy consumption data of the EEUs and, optionally, passenger traffic information data and/or event information data that took place during the consumption period during which a considered corresponding final set and its associated EEUs energy consumption data were respectively applied and measured. Said database preferentially also associates, to each final set of test timetables that it stores, its corresponding set of nominal timetables (i.e. the nominal set of timetables from which said final set of test timetables has been obtained), and for said corresponding set of nominal timetables, EEUs energy consumption data and, optionally, passenger traffic information data and/or event information data that took place during the consumption period during which the considered set of nominal timetables and its associated EEUs energy consumption data were respectively applied and measured. By this way, the energy consumption module may generate a database that comprises several groups of data, wherein each group of data comprises:
- a set of nominal timetables for the predefined set of lines;
- EEUs energy consumption data measured during a consumption period during which said set of nominal timetables was applied or implemented (i.e. during which the timetables of the set were applied or implemented by the energy management module);
- if any, event information data concerning an event that took place during said consumption period during which said set of nominal timetables was applied or implemented;
- if any, passenger traffic information data concerning the traffic of passengers during said consumption period during which said set of nominal timetables was applied or implemented;
- a final set of test timetables that has been obtained from said set of nominal timetables comprised within the present group;
- EEUs energy consumption data measured during a consumption period during which said final set of test timetables was applied or implemented;
- if any, event information data concerning an event that took place during said consumption period during which said final set of test timetables was applied or implemented;
- if any, passenger traffic information data concerning the traffic of passengers during said consumption period during which said final set of test timetables was applied or implemented.

Optionally, the energy management module may comprise another machine learning algorithm (also called hereafter "Prediction Machine Learning Algorithm" or simply "PMLA"), wherein said PMLA has been trained to predict energy consumption of the set of railway stations when receiving as input:
- a set of current timetables (which are considered as nominal timetables) that are currently applied or implemented with respect to the motion of rail vehicles on the lines of the predefined set of lines corresponding to said set of railway stations;
- EEUs energy consumption data representing energy consumption of the EEUs with respect to said current timetables;
- optionally, event information data concerning an event that is going to take place in the future and/or passenger traffic information data;
said PMLA outputting a predicted future energy consumption of each of the EEUs, which is then used by the energy management module for estimating a future global energy consumption for said set of railway stations. Preferentially, if the predicted future energy consumption exceeds a predefined energy consumption threshold, then said energy management module is configured for automatically performing the steps a)-d) described above with respect to the set of current nominal timetables, seeking thus to determine a final set of test timetables with respect to said set of current nominal timetables, so that the value of said predicted future energy consumption be decreased when using said final set for controlling the motion of the rail vehicles on the predefined set of lines. In other words, the output of said PMLA might be used for triggering the calculation or determination of said final set of test timetables.

In particular, said PMLA has been trained on several couples comprising each an input training dataset and an associated output training dataset, wherein for each couple, the input training dataset comprises:
- a set of timetables (it can be nominal timetables or test timetables) that are currently applied or implemented with respect to the motion of rail vehicles on the lines of the predefined set of lines corresponding to said set of railway stations;
- EEUs energy consumption data representing energy consumption of the EEUs with respect to said set of timetables during a first consumption period characterized by a starting time and an ending time;
- optionally, passenger traffic information data covering a period in the future with respect to said first consumption period and/or event information data concerning an event that is going to take place in the future with respect to the first consumption period (i.e. after its ending time);
and the output training dataset comprises:
- EEUs energy consumption data representing energy consumption of the EEUs with respect to said set of timetables during a second consumption period which starts after said ending time of the first consumption period. It represents thus future consumption data with respect to the consumption data of the first consumption period, wherein said event, if any, takes place during said second consumption period, and similarly, said passenger traffic information data, if any, covers said second consumption period;
wherein preferentially, the first and second consumption periods, and/or said set of timetables are different for each couple. By continuously acquiring EEUs energy consumption data in real time, the energy management module may feed said PMLA with the continuously or periodically acquired energy consumption data of the EEUs, as well as the set of current timetables and any event information data/passenger traffic information data that will take place in the future, said PMLA enabling to predict the future consumption of energy of each EEUs, which is then used by the energy management module for calculating the future global energy consumption of the set of railway stations. If said future global energy consumption exceeds said predefined energy consumption threshold, then the energy management module automatically launches a finetuning of said current timetables (which represent the currently nominal timetables) in order to determine said final set of test timetables that will minimize the global energy consumption.

### Brief Description of the Drawing

Further aspects of the present invention will be better understood through the following drawings, wherein like numbers designate like objects:
- Fig. 1: schematic illustration of a railway network according to the invention.
- Fig. 2: schematic example of nominal timetables according to the invention.
- Fig. 3: flowchart of a preferred embodiment of a method according to the invention.
- Fig. 4: schematic illustration of a variational matrix according to the invention.

### Description of Examples

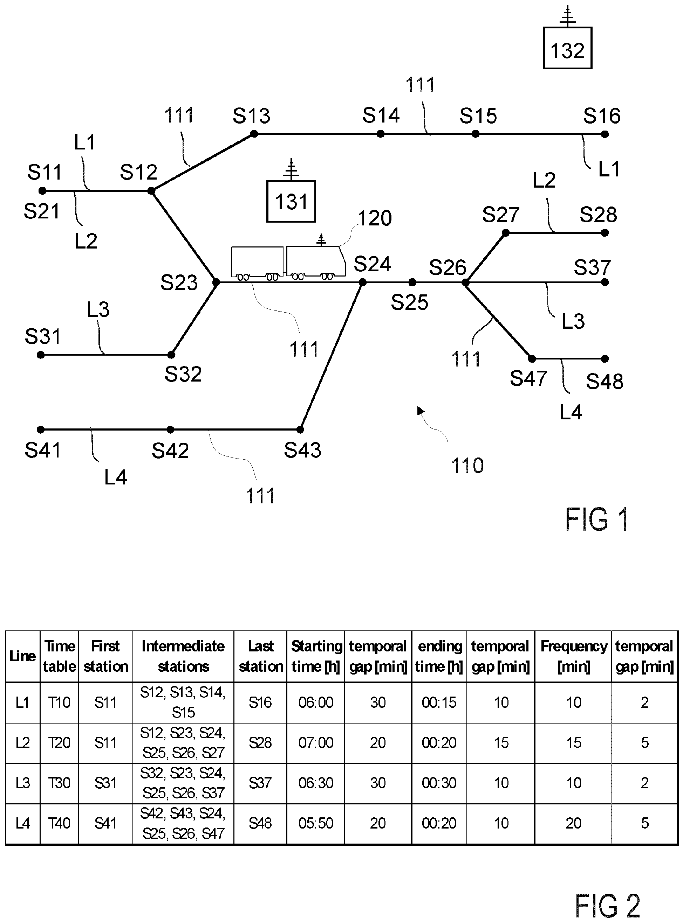

Figure 1 schematically illustrates a railway network 110 comprising different railway stations Sij (i,j being positive integers used for identifying the different railway stations): for instance, the railway stations S11, S12, S13,..., S48. The railway stations are interconnected with tracks 111 on which rail vehicles 120 may move for serving said railway stations. Each railway station is connected to an external electrical grid configured for supplying the railway station in electrical energy. Each of said railway stations might be connected to the same external electrical grid. Optionally, one or several of said railway stations might be connected to another external electrical grid. However, even in this last case, the concept of the invention remains the same. As known in the art, each railway station may comprise an electrical panel that receives electrical energy from said external electrical grid and distributes it across the different EEUs of the railway station. The electrical panel is typically connected to the EEUs of the railway station, wherein said EEUs comprise for instance electric track equipment (point machines, level crossing, signals, etc.), electric station equipment (platform equipment, light, escalators, lifts, ventilation systems, door systems, alarm systems, air conditioning systems, photovoltaic systems, battery systems, etc.), energy supplying systems for electric vehicles like trains, trams, subways, buses, etc. The present invention is interested in minimizing or optimizing the energy consumed from the external electrical grid by a set of railway stations that is defined from a predefined set of lines of the railway network.

Indeed, the railway network 110 may comprise several lines, for instance
- the line L1 connecting the first station S11 of the line L1 to the last station S16 of said line L1,
- the line L2 connecting the first station S21 = S11 of the line L2 to the last station S28 of said line L2,
- the line L3 connecting the first station S31 of the line L3 to the last station S37 of said line L3,
- the line L4 connecting the first station S11 of the line L4 to the last station S48 of said line L4,
wherein each line is associated to an own nominal timetable which defines the railway stations served by the line, a starting time at the first station of the first rail vehicle serving the first station during operating hours, an ending time with respect to said operating hours (for instance the time at the last station, or resp. at the first station, at which the last rail vehicle serves said last, resp. first, station during said operating hours), and one or several service frequencies according to which the stations of the line are served during said operating hours, typically between said starting time and ending time. The nominal timetable comprises thus a set of "temporal parameters", which are said starting time, said ending time, and one or several service frequencies. In particular, if the nominal timetable comprises several service frequencies, then it further comprises, for each service frequency, an associated temporal period during which the concerned service frequency is implemented. Said associated temporal period might be defined by a starting time, and ending time or a duration, and is part of the temporal parameters of the nominal timetable. The present invention proposes to finetune or adjust at least one of said temporal parameters of the set of temporal parameters for minimizing the energy consumption of the railway stations associated to the predefined set of lines. According to Fig. 2, the nominal timetables associated to the lines L1-L4 are respectively the timetables T10-T40, which indicate for each line the first station, the last station, intermediate stations served by the line between said first and last station, the starting time, the ending time, and the service frequency. For instance, according to the nominal timetable T10, the line L1 operates from 06:00 until 00:15, by serving the first railway station S11 at 06:00 in the morning for the first time, and serving the last railway station S16 at 00:15 for the last time. Optionally, the duration of the trip from the first railway station to the last railway station might be provided by each nominal timetable.

In order to optimize or minimize the energy consumed by said set of railway stations, the present invention proposes to manage their energy consumption by a system comprising an energy management module 131. The latter is typically an intelligent system comprising a processor for processing inputted or received data and a memory. It can be for instance a computer system. The system according to the invention might thus be a computer-implemented system, and the method, a computer-implemented method. The energy management module 131 is typically connected to each railway station of said set of railway stations. Preferentially, it is able to acquire or receive energy consumption data from each of said railway stations of the set by either directly or indirectly collecting said energy consumption data. Known in the art techniques might be used by the energy management module 131 for acquiring energy consumption data from the railway stations of said set of railway stations. For instance, it may collect the energy consumption data of the EEUs of a railway station from its electrical panel. Optionally, the energy management module 110 may communicate with a control center 132 in charge of managing traffic of the rail vehicles 120 on the railway network. It might then acquire said energy consumption data of the EEUs indirectly from the control center 132. Additionally, it may acquire from said control center 132 nominal timetables corresponding to the lines of the railway network 110.

As mentioned above, the present invention is interested in optimizing or minimizing the energy consumption of a set of railway stations. Said set is defined in function of the lines of the railway network. Indeed, said set of railway stations comprises all stations of a predefined set of lines. The predefined set of lines might by stored in a memory of the system according to the invention, for instance in a memory of the energy management module 110. Said predefined set of lines might be provided by a user selecting, for the railway network 110, which lines are part of said predefined set of lines. Said predefined set of lines may comprise all lines of the railway network 110. In particular, from said predefined set of lines, the energy management module 131 is able to automatically define the set of railway stations that corresponds to said predefined set of lines, i.e. all stations served by the predefined set of lines. For instance, if the predefined set of lines comprises the lines L1-L4 of Figure 1, then all stations shown in Fig. 1 are part of said set of railway stations since the set of railway stations comprises all stations served by the lines of the predefined set of lines. From a practical point of view, a user may select part of the lines operating on a railway network (e.g. only passenger lines), or all lines operating on said railway network, for the purpose of minimizing or optimizing the energy consumption of the railway stations served by the selected lines.

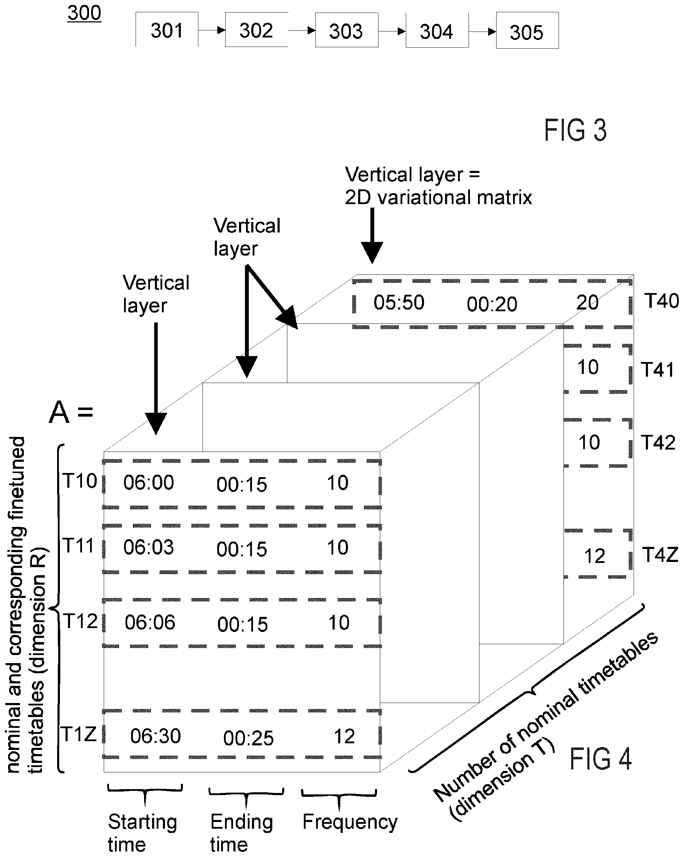

In order to minimize or optimize the energy consumed by the railway stations of the set, the present invention proposes to adapt the nominal timetables associated to the lines of the predefined set. This solution will be better understood through the different steps of the method 300 illustrated by the flowchart of Figure 3. The different steps of said method are typically carried out by the system according to the invention, notably by its energy management module 131.

At step 301, the energy management module 131 may acquire or receive, for each of the lines of said predefined set of lines, a corresponding nominal timetable. In other words, the energy management module 131 may acquire or receive, for the predefined set of lines, a corresponding set of nominal timetables comprising as many nominal timetables as there are lines in said predefined set, wherein each nominal timetable of said corresponding set of nominal timetables is associated to one (i.e. a single one) of said lines of the predefined set. Additionally, the energy management module 131 may acquire or receive a given consumption period that is configured for defining a temporal period during which the consumption of the railway stations of the set of railway stations has to be optimized or minimized. Preferentially, the energy management module 131 may acquire or receive said nominal timetables and/or given consumption period from the control center 132 or as an input from an operator. From said nominal timetables, the energy management module 131 may automatically determine the railway stations belonging to the set of railway stations whose energy has to be minimized or optimized. The energy management module 131 may also receive or acquire the predefined set of lines, and then automatically acquire, for each line of said predefined set, its associated nominal timetable, resulting in said corresponding set of nominal timetables for the predefined set of lines.

At step 302, the energy management module 131 is configured for automatically creating, for each nominal timetable of said corresponding set, a set of finetuned timetables by finetuning at least one of the temporal parameters defined in the nominal timetable, e.g. the starting time and/or ending time and/or any service frequency of the considered nominal timetable. Each set of finetuned timetables comprises thus different versions of the nominal timetable to which it is associated, wherein for each of said versions, at least one temporal parameter of the nominal timetable has been adjusted or finetuned, i.e. the value of said temporal parameter in the finetuned timetable is different from its value in the nominal timetable. Preferentially, said creation of the set of finetuned timetables for each timetable of said corresponding said of nominal timetables is triggered by a current or predicted energy consumption for the set of railway stations that exceeds a predefined energy consumption threshold. For instance, the energy management module 131 might acquire in real time energy consumption data from the EEUs of the railway stations of the set of railway stations and determine the total energy consumption of the railway stations of said set over a predefined given time period. The real time energy consumption data of the EEUs are stored by the energy management module as temporal energy consumption data (i.e. energy consumption in function of the time), wherein said real time energy consumption data represents the energy currently consumed by the EEU of a concerned station. Preferentially, said real time energy consumption data are used for populating said database used for the training of the so-called PMLA. If said total energy consumption exceeds the predefined energy consumption threshold, then the creation of the set of finetuned timetables might be launched by the energy management module 131. Alternatively, the energy management module 131 may predict a future energy consumption of the set of railway stations. For this purpose, the energy management module may feed (i.e. provide as input) in real time the PMLA with the real time energy consumption of the EEUs of the set of railway stations, with the set of timetables currently used for controlling a motion of rail vehicles on the lines of the predefined set of lines, and optionally, with any event information data that will take place in the future within a given consumption period for which said future energy consumption is calculated, said PMLA having been trained to output, from said inputted data, the future energy consumption of each EEUs for the given consumption period. If said future energy consumption exceeds then the predefined energy consumption threshold, then said finetuning of the nominal timetables of the corresponding set of nominal timetables takes place, otherwise, rail vehicles remain operated according to the timetables currently in use.

At step 303, notably if said predefined energy consumption threshold has been exceeded, i.e. if a set of finetuned timetables has been created for each nominal timetable, then the energy management module 131 is configured for automatically creating, for each line of the predefined set of lines, a set of test timetables. The latter comprises the nominal timetable associated to the concerned line and the finetuned timetables of the set of finetuned timetables that has been created for said nominal timetable.

At step 304, in particular only if said predefined energy consumption threshold has been exceeded, the energy management module 131 is configured for feeding the EMLA with different combinations of the test timetables for automatically determining a final set of test timetables configured for minimizing the energy consumed by the set of railway stations during the given consumption period, said energy consumed by the set of railway station being said global energy. For instance, the energy management module 131 may create a main matrix A as illustrated in Figure 4, wherein each vertical layer of the main matrix A represents a variational matrix generated for a nominal timetable, i.e. for a line of the predefined set of lines. For instance, the example of the main matrix A shown in Figure 4 has been generated for the nominal timetables appearing in Figure 2, which are associated to 4 lines and comprise 4 nominal timetables T10-T40. A corresponding vertical layer of the main matrix A is associated to each of said nominal timetables T10-T40. Each vertical layer represents a variational matrix generated for the considered nominal timetable. The main matrix A is a three-dimensional (3D) matrix, RxSxT, wherein a first dimension R corresponds to the number of rows and is related to the number of variations or adaptations of the nominal timetable. For instance, T11,...,T1Z correspond to variations or adaptations of the nominal timetable T10. For each nominal timetable, said number of variations or adaptions might be the same. If this would not be the case, known in the art padding techniques might be used. A second dimension S corresponds to the number of columns and is related to the temporal parameters of the nominal timetables which are going to be adapted or varied. Said temporal parameters are preferentially the starting time, the ending time, and the frequency. Consequently, the main matrix A preferentially comprises 3 columns, or more columns if additional service frequencies are defined in the timetable. Furthermore, additional temporal parameters might be acquired from a nominal timetable, like a duration of the trip from the first station to the last station, a duration of a stop of a rail vehicle at a station, etc., increasing then the number of columns of the main matrix A. Finally, the third dimension T of the main matrix A corresponds to the number of vertical layers and is thus related to the number of nominal timetables, or, in other words, to the number of lines of said predefined set. Within a same vertical layer, at least one row comprises the temporal parameters of the nominal timetable, while each other rows represents a finetuned version of said nominal timetable, i.e. a finetuned timetable, comprising one or several finetuned or adjusted temporal parameters with respect to a corresponding value defined in the nominal timetable. Therefore, within a same vertical layer, the different rows represent different timetables for a same line. For each row of a vertical layer of the main matrix A, at least one temporal parameter of the nominal timetable associated to the vertical layer is changed. For instance, T11 corresponds to a finetuning of the nominal timetable T10 wherein the starting time only has been modified, being 06:03 instead of 06:00 in the nominal timetable. Each temporal parameter of the nominal timetable might be varied within a respective predefined gap as illustrated in Figure 2. For instance, the starting time might be varied within a predefined starting temporal gap, e.g. +/- 20 min for T20, the ending time might be varied within a predefined ending temporal gap, e.g. +/- 15 min for T20, and the service frequency might be varied within a predefined frequency temporal gap, e.g. +/- 5 min for T20. Said predefined gaps might be provided by a user or stored in the memory of the energy management module 131. The energy management module 131 is then able to automatically determine finetuned timetables by automatically varying or adjusting the temporal parameters of the nominal timetable within their respective predefined gaps, e.g. automatically varying the starting time and/or ending time and/or any service frequency, creating therefore for each nominal timetable a set of finetuned timetables. The number of finetuned timetables might be a fixed parameter, or automatically determined in function of the number of parameters of the nominal timetable and/or a value of the predefined gaps. At the end, each row of the main matrix A corresponds to a test timetable according to the invention. To summarize, for each nominal timetable of a corresponding set of nominal timetables, the energy management module 131 creates a set of finetuned timetables, like the finetuned timetables T11,...,T1Z for the nominal timetable T10, or the finetuned timetables T41,...,T4Z for the nominal timetable T40.

The EMLA is then able to evaluate an energy consumption of each railway station of the set of railway stations when receiving as input a combination of timetables comprising one timetable for each line of the predefined set of lines associated to the set of railway stations and a given consumption period for which said energy consumption has to be evaluated. Said given consumption period might be predefined in a memory of the energy management module 131 or might be provided as input by a user. The energy management module 131 might then use the main matrix A for creating combinations of test timetables by automatically selecting, for each vertical layer of the main matrix A, one row (i.e. one row per vertical layer of the main matrix A is automatically selected), wherein the combinations are different from one another. At the end, the energy management module 131 is configured for selecting the combination which results in the minimum energy consumption, said "final" or "selected" combination representing thus the final set of test timetables that enables to optimize the energy consumption of the railway stations of said set of railway stations. Optionally, a cost function or a weighting technique might be used for speeding up the determination of said final set. In addition, combination rules might be used by the energy management module for preventing test timetables combinations that could lead to an issue, e.g. resulting in delays, or overcrowding, etc. EMLA is thus able to learn the relation between timetable changes and energy consumption changes to predict or evaluate future energy consumption for changes applied to nominal timetables of the so-called corresponding set of nominal timetables, the energy management module 131 being able to automatically find the final set of test timetables minimizing said energy consumption by processing the output of the EMLA. Preferentially, EMLA is an artificial neural network or a random forest. Of course, other types of machine learning algorithm might be used.

Preferentially, the set of input data used for EMLA might additionally comprise said event information data and/or passenger traffic information data. In such a case, the EMLA has been trained to calculate the energy consumed by each combination of test timetables in function of the received event information data and/or passenger traffic information data, enabling to select at the end a final set of test timetables that will minimize the energy consumption of the set of railway stations when, for instance, the event characterized by said event information data takes place.

At step 305, the energy management module 131 is configured for outputting the final set of test timetables which corresponds to the combination of test timetables that minimizes said global energy during the given consumption period. Preferentially, the energy management module might automatically send to the control center 132 said final set of test timetables, wherein the control center 132 automatically implements said test timetables of the final set upon its reception, controlling therefore the traffic on the predefined set of lines in function of the test timetables. Alternatively, the energy management module 131 might itself be configured for controlling, at step 306, a motion of the rail vehicles 120 on the lines of the predefined set of lines according to the test timetables of said final set.

To conclude, the present invention proposes a new solution for minimizing the energy consumed by a set of railway stations that is based on an adaptation of nominal timetables of lines serving said railway stations.

## Claims

1. System for managing energy consumption of a set of railway stations (S11, S12,..., S48) of a railway network (110), wherein said set of railway stations (S11, S12,..., S48) comprises all stations served by a predefined set of lines (L1,...,L4), wherein each line (L1,...,L4) of said predefined set starts at a respective first station, ends at a respective last station, and is associated to a respective nominal timetable (T10,...,T40) so that the predefined set of lines be associated to a corresponding set of nominal timetables, wherein each nominal timetable (T10,...,T40) associated to a line defines, for said line, the stations served by the line and a set of temporal parameters configured for defining a schedule according to which the railway stations of said line are served, said system comprising:
- an energy management module (131) configured for receiving or acquiring a given consumption period during which the energy consumption of the set of railway stations has to be optimized, for receiving or acquiring each nominal timetable of the corresponding set of nominal timetables, for automatically creating for each received or acquired nominal timetable a set of finetuned timetables by finetuning at least one of its temporal parameters , for creating for each line of said predefined set, a set of test timetables comprising the nominal timetable associated to said line and the finetuned timetables created for said nominal timetable, for feeding a machine learning algorithm, called hereafter "EMLA", with different combinations of the test timetables and with said given consumption period for automatically determining a final set of test timetables configured for minimizing the energy consumed by the set of railway stations during said given consumption period, wherein each combination comprises a test timetable for each line of the predefined set, and wherein the EMLA has been trained to predict an energy consumption of each railway station of the set of railway stations when receiving as input a set of input data comprising a timetable for each line of the predefined set and a consumption period, the energy management module being further configured for outputting said final set of test timetables as the combination of test timetables that minimizes the energy consumed by the set of railway stations.

2. System according to claim 1, wherein the energy management module (131) is configured for controlling a motion of rail vehicles (120) on the railway network (110) according to the outputted final set of test timetables.

3. System according claim 1 or 2, wherein, for creating said set of test timetables for each line of the predefined set, the energy management module (131) is configured for creating, for each of said nominal timetables, and thus for each line, a variational matrix comprising matrix elements representing the temporal parameters of the nominal timetable and variations of at least one of said temporal parameters, the energy management module (131) being configured for feeding the EMLA with matrix elements of the created variational matrices in order to find the combination of temporal parameter values, which, for said predefined set of lines, minimizes said energy consumed by the set of railway stations.

4. System according to claim 3, wherein said temporal parameters comprise a starting time that defines the time at which a first rail vehicle serves the first station of the line during operating hours, an ending time configured for defining, together with the starting time, a duration of said operating hours, and a service frequency according to which the stations of the line are served between said starting time and ending time, the variational matrix comprising at least three columns, namely a first column comprising matrix elements associated to starting times, a second column comprising matrix elements associated to ending times, and a third column comprising matrix elements associated to the service frequencies for the concerned line, each variational matrix comprising one row corresponding to the nominal timetable, and wherein each other row of the variational matrix represents a variation within the starting time and/or ending time and/or frequency with respect to the nominal timetable, i.e. one of said finetuned timetables, the energy management module (131) being further configured for iteratively using as input to the EMLA a combination of the rows of the created variational matrices, wherein for each row combination, a single row is picked up in the variational matrix associated to each line of the predefined set of lines, each row combination being different from one another, the EMLA outputting for each row combination an associated predicted energy consumption of each station of the set of railway stations, the energy management module (131) being configured for calculating for each row combination a corresponding energy consumed by the set of railway stations from the energy consumption predicted for each station for the concerned row combination.

5. System according to claim 4, wherein the energy management module (131) comprises a set of combination rules, and is configured for only performing row combinations that satisfy said combination rules.

6. System according to claim 5, wherein said combination rules are configured for constraining a value of a starting time and/or an ending time and/or a service frequency of one line of the predefined set with respect to a value of a starting time and/or an ending time and/or a service frequency of another line of the predefined set.

7. System according to one of the claims 1 to 6, wherein the energy management module (131) is configured for collecting, for each railway station of said set, event information data, wherein each event information data provides a temporal information regarding an occurrence of an event, the energy management module (131) being further configured for using said event information data as additional input data within the set of input data used for feeding the EMLA.

8. Method (300) for managing energy consumption of a set of railway stations (S11, S12,...,S48) of a railway network (110), wherein said set of railway stations (S11, S12, ..., S48) comprises all stations served by a predefined set of lines (L1,...,L4), wherein each line (L1,...,L4) of said predefined set starts at a respective first station, ends at a respective last station, and is associated to a respective nominal timetable (T10,...,T40) so that the predefined set of lines be associated to a corresponding set of nominal timetables, wherein each nominal timetable (T10,...,T40) associated to a line defines, for said line, the stations served by said line and a set of temporal parameters configured for defining a schedule according to which the railway stations of said line are served, the method (300) comprising:
- acquiring (301) each nominal timetable of the corresponding set of nominal timetables and a given consumption period during which the energy consumption of the set of railway stations has to be optimized;
- automatically creating (302), for each nominal timetable previously acquired, a set of finetuned timetables by finetuning at least one of its temporal parameters;
- automatically creating (303), for each line of the predefined set of lines, a set of test timetables comprising the nominal timetable associated to said line, and, with respect to said nominal timetable, the finetuned timetables of the set of finetuned timetables that has been created for said nominal timetable;
- feeding (304) a machine learning algorithm, called hereafter EMLA, with different combinations of the test timetables and the given consumption period for automatically determining a final set of test timetables configured for minimizing the energy consumed by the set of railway stations during the given consumption period, wherein the EMLA has been trained to predict an energy consumption of each railway station of the set of railway stations when receiving as input a set of input data comprising a timetable for each line of the predefined set and a consumption period, wherein each combination comprises a test timetable for each line of the predefined set;
- outputting (305) the final set of test timetables which corresponds to the combination of test timetables that minimizes the energy consumed by the set of railway stations.

9. Method (300) according to claim 8, comprising controlling (306) a motion of the rail vehicles (120) on the railway network (110) according to the outputted final set of test timetables.

10. Method (300) according to claim 8 or 9, wherein creating (302) said set of test timetables for each line of the predefined set comprises creating, for each line of the predefined set, a variational matrix comprising matrix elements representing the temporal parameters of the nominal timetable and variations of at least one of said temporal parameters of the nominal timetable, and feeding the EMLA with matrix elements of the created variational matrices in order to find the combination of temporal parameter values, which, for said predefined set of lines, minimizes energy consumed by the set of railway stations.

11. Method (300) according to claim 10, wherein said temporal parameters comprise a starting time that defines the time at which a first rail vehicle serves the first station of the line during operating hours, an ending time configured for defining, together with the starting time, a duration of said operating hours, and a service frequency according to which the stations of the line are served between said starting time and ending time, the variational matrix comprising at least three columns, namely a first column comprising matrix elements associated to starting times, a second column comprising matrix elements associated to ending times, and a third column comprising matrix elements associated to the service frequencies for said line, each variational matrix comprising one row corresponding to the nominal timetable, and wherein each other row of the variational matrix represents a variation within the starting time and/or ending time and/or frequency with respect to the nominal timetable, the method (300) further comprising iteratively using as input to the EMLA a combination of the rows of the created variational matrices, wherein said combination of row is generated by picking up a single row in the variational matrix associated to each line of the predefined set of lines, each row combination being different from one another, the method (300) further comprising outputting, for each row combination and by said EMLA, an associated predicted energy consumption of each railway station of said set of railway stations, and calculating for each row combination a corresponding energy consumed by the set of railway stations from the energy consumption predicted for each of said railway stations for the concerned row combination.

12. Method (300) according to claim 11, comprising applying a set of rules to said row combinations so that only row combinations that satisfy said combination rules are performed.

13. Method (300) according to claim 12, wherein said combination rules are configured for constraining a value of a starting time and/or an ending time and/or a service frequency of one line of the predefined set with respect to a value of a starting time and/or an ending time and/or a service frequency of another line of the predefined set.

14. Method (300) according to one of the claims 8 to 13, comprising collecting, for each railway station of said set of railway stations, event information data, wherein each event information data provides a temporal information regarding an occurrence of an event, and using said event information data as additional input data for feeding the EMLA.

15. Method (300) according to one of the claims 8 to 14, comprising collecting, for each railway station of said set of railway stations, real time energy consumption data of electrical energy units of the railway stations, and automatically triggering the creation of the set of finetuned timetables if a current or predicted energy consumption for the set of railway stations exceeds a predefined energy consumption threshold.
